# EUROPEAN PATENT APPLICATION

(11) **EP 2 007 057 A1**
(43) Date of publication of application: **24.12.2008**
(21) Application number: 07301128.0
(22) Date of filing: 19.06.2007
(51) Int. Cl.: H04L 1/18, H04L 5/02, H04L 27/26

(54) **Method for fast packet scheduling of multiple users in a multicarrier radio communication network, corresponding scheduler and system**

(71) Applicant: Alcatel Lucent, 75008 Paris (FR)
(72) Inventor: Schmidt, Michael, 70374 Stuttgart (DE)
(74) Representative: Wetzel, Emmanuelle

(57) **Abstract**

The present invention relates to a method. for allocating radio resources for data transmission to/from users having experienced prior data transmissions over a radio link in a multi carrier radio communication network, an automatic repeat request or hybrid-automatic repeat request protocol being used for signaling erroneous data through a feedback message, said data transmission to/from users being assigned a set of sub carriers by a scheduling algorithm

According to the present invention, the method foresees that the subcarriers assigned to at least two users having experienced a negative feedback message after an erroneous data transmission are rearranged among said at least two users for subsequent data transmission.

## Description

### BACKGROUND OF THE INVENTION

The present invention relates to a method for scheduling data transmissions to/from users on the up-/downlink of a multicarrier radio communication network.

Such multi-carrier systems often implement Orthogonal Frequency Division Multiple Access (OFDMA) as multi-user transmission technique. OFDMA offers a sensible alternative for high-speed mobile applications, and represents an important step for next generation mobile radio systems and 4^{th} generation mobile communication systems The selection of an OFDMA-based air-interace technology by the 3^{rd} Generation Partnership Project (3GPP) standardization body for its 3G LTE system (3G Long Term Evolution) illustrates this.

In multi-user multi-carrier systems, such as OFDMA transmission systems, users communicate on a set of dynamically allocated narrow-band orthogonal sub-carriers under the control of a MAC-layer scheduling entity. Typically dynamic sub-carrier allocation and adaptive modulation and coding (AMC) is performed per TTI depending on channel quality metrics (e.g. SINR) in order to realize multi-user diversity gain in the system.

The achievable multi-user diversity gain itself depends largely on the amount of channel state information available in the MAC layer. This is an issue especially for FDD systems, which cannot exploit the reciprocity of the up- and downlink radio channel to infer channel quality related informations. It has been proposed to exchange channel quality information in a feedback channel, so that the entity of the network which is responsible for resource allocation (e.g. the base station E-NB using 3GLTE terminology) disposes of quality measures experienced at the different user equipments (UE). For this purpose and in the ideal case, the receiver should make a channel quality measurement for each sub-carrier and report it on the feedback channel to the transmitter. The drawback is that this requires a significant signaling overhead and exchange of control information especially in broad-band radio access systems envisaged in the area of 4G mobile communication.

Other scheduling algorithms have been proposed to limit as much as possible the load on the feedback channel. Frequency/Time-diverse scheduling has been envisaged based on virtual channels formed by an appropriate set of sub carriers per TTI (Transmission Time Interval) and a predefined frequency hopping pattern. The virtual channels are preferably composed of non consecutive sub carriers maximizing the frequency and time diversity. This solution enables it to average channel quality fluctuations in the frequency and time domain in that if a sub carrier of the virtual channel is affected by extremely degraded conditions another sub carrier of the virtual channel would on the contrary experience good channel conditions resulting in average in a sufficient well received message. This is nevertheless not optimal in terms of multi-user diversity since it averages out frequency/time selective channel fluctuations instead of exploiting those. This compromise has to be made due to the absence of feedback on the instantaneous channel quality in the frequency-/time domain.

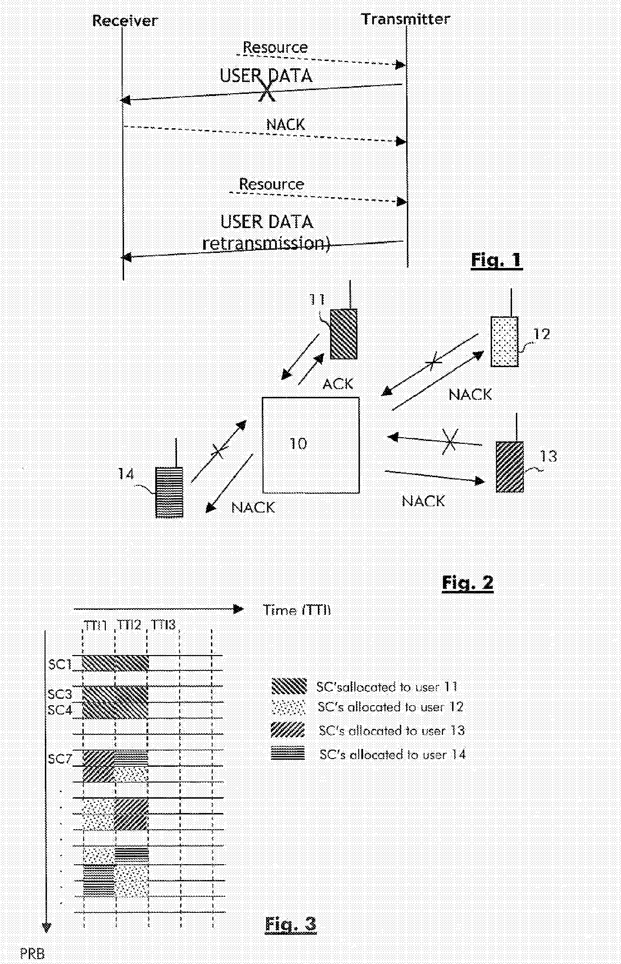

As degraded channel conditions may lead to erroneous data transmissions of user data, ARQ (Automatic Repeat ReQuest) or HARQ (Hybrid Automatic Repeat reQuest) protocols are employed to achieve reliable wireless data transmission. In such protocols, the receiver checks the integrity of each transmission attempt with e.g. a CRC check and informs the transmitter about successful / unsuccessful reception with positive or negative acknowledgment (ACK or NACK). The transmitter, upon receiving of such a NACK retransmits the missing data entity on the radio link. In hybrid ARQ protocols, soft-combining of all prior transmission attempts is performed at receiver side to be able achieve power and coding gain. Figure 1 shows a message flow between a transmitter and a receiver implementing an ARQ mechanism as known in the prior art. A resource is allocated to the transmitter by a scheduler. The transmitter sends user data using this resource to the receiver. This transmission is may not be successful due e.g. to bad channel conditions. The receiver detects this missing data and send a NACK message back to the transmitter.

Optionally, in case of dynamic resource allocation the transmitter gets a new resource allocation from the scheduler and resends the user data using this new resource to the receiver. In case of static resource allocation, the transmitter repeats the user data on the same resource as previously allocated.

A particular object of the present invention is to provide an improved scheduling mechanism taking into account channel conditions on the different subcarriers implicitly based on ACK/NACK feedback information but without needing a load intensive explicit channel quality feedback mechanism on the return link.

Another object of the invention is to provide a corresponding scheduler adapted to perform this method.

### SUMMARY OF THE INVENTION

These objects, and others that appear below, are achieved by a method for dynamically allocating radio resources for data transmission to/from users having experienced prior data transmissions over a radio link in a multi carrier radio communication network according to claim 1, a scheduler according to claim 8, a base station according to claim 9.

According to the present invention, the radio resources allocated to users having experienced erroneous data transmission is chosen among the resources having been allocated to other users having also experienced erroneous data transmission during the same transmission time interval. User having experienced successful data transmission are if required rescheduled by re-allocating the same radio resources of the last transmission attempt. The positive/negative transmission is detected thanks to ACK/NACK feedback messages which are to be sent according to a suitable ARQ/HARQ protocol.

The criteria for rearrangement of the radio resources among the user with erroneous may be based on the distance between the subcarriers, the number of sub carriers required for each user...

The method according to the present invention presents the advantage not to require additional feedback regarding channel quality on the feedback channel for determining new resources in case of erroneous transmission. Information from the ARQ/HARQ protocol are used in order to optimize the resource assignment: the new set of allocated radio resources has on average a lower probability of erroneous transmission.. Predefined allocation criteria are applied to better guaranty that the next transmission will be a successful one.

Further advantageous features of the invention are defined in the dependent claims.

### BRIEF DESCRIPTION OF THE DRAWINGS

Other characteristics and advantages of the invention will appear on reading the following description of a preferred embodiment given by way of non-limiting illustrations, and from the accompanying drawings, in which:
- Figure 1 shows a message flow between a transmitter and a receiver implementing an ARQ or H-ARQ mechanism as known in the prior art;
- Figure 2 details a system comprising terminals and base stations where the method according to the present invention can be implemented;
- Figure 3 shows a resource allocation example to terminals belonging to a system as shown on figure 2;
- Figure 4 details a base station according to the present invention.

### DETAILED DESCRIPTION OF THE INVENTION

Figure 1 has already been described in connection with prior art.

Figure 2 details a system comprising terminals and base stations where the method according to the present invention can be implemented.

The system comprises base station 10 and terminals 11, 12, 13, 14 all located under the coverage of base station 10. All terminals are allocated resources by a scheduling algorithm in order to send data toward base station 10. Base station 10 implements an ARQ/HARQ protocol in order to have distorted data be retransmitted by the terminals they originate from. For this purpose, a feedback message ACK resp NACK is sent by base station 10 to terminals 11, ..., 14 indicating the status of the currently received data. In this example, the data sent by terminal 11 are correctly received and base station 10 generates an ACK message, on the contrary the data sent by terminals 12, 13, 14 are distorted on the air interface. Base station 10 consequently sends NACK message back to terminals 12, 13, 14.

Figure 3 shows a resource allocation example to terminals belonging to a system as shown on figure 2.

A Physical Resource Block PRB should be understood, in the context of the present invention, as a radio resource that can be allocated to a user per transmission time interval (TTI). Resource and PRB are used with the same meaning in the context of this invention. Preferably, a PRB is uniquely addressable by the scheduler and consists in an OFDM system in a set of M sub-carriers in the frequency domains that can either be consecutive or non consecutive. In the time domain, a PRB has an extension of N consecutive time symbols (e.g. OFDM symbols).

It will be understood by those skilled in the art that the invention may apply if the PRB has only a frequency extension or only a time extension or a mix of both time and frequency extension.

This inventions takes place in the context of a multi carrier communication network. A simplified multi carrier system is shown on figure 3. The frequency domain assigned to the system is subdivided in 16 sub carriers SC1, ..., SC16. The time domain is also sub divided in Transmission Time Intervals TTI1, ..., TTI4. In this example, the resources allocated for TTI1 to the different terminals are
Terminal 11 has been assigned SC1 SC3, SC4;
Terminal 12 has been assigned SC7 and SC8;
Terminal 13 has been assigned SC10, SC11, SC13;
Terminal 14 has been assigned SC14 and SC15.

As previously mentioned, the transmissions from Terminals 12, 13, 14 have been erroneous.

Resources for the next time interval TTI 2 will be granted according to the new invention.

Terminal 11 will keep the same resources as previously allocated as it experienced correct transmission.

Terminal 12 will be scheduled on PRBs which were previously allocated to other terminals which have experienced an error (i.e. on PRBs which were in TTI 1 allocated to terminals 13 or 14). In this example Terminal 12 gets assigned SC10 and SC11 for TTI2

Terminal 13 will be scheduled on PRBs which were previously allocated to other terminals which have experienced an error (i.e. on PRBs which were in TTI 1 allocated to terminals 12 or 14). In this example Terminal 13 gets assigned SC8, SC14 and SC15 for TTI2.

Terminal 14 will be scheduled on PRBs which were previously allocated to other terminals which have experienced an error (i.e. on PRBs which were in TTI 1 allocated to terminals 12 or 13). In this example Terminal 12 gets assigned SC7 and SC13 for TTI2.

More precisely, the way the new allocation among terminals having experienced a negative feedback message can be done in several different ways. The scope of the present invention should not be restricted to one specific solution for rearranging the PRB allocation. A possible solution would be to maximize the distance between the PRB allocation which has lead to erroneous transmission and the new PRBs after rearrangement.

Another criteria for rearrangement of the PRBs would be to try as much as possible to assign contiguous sub carries to the same terminal.

Alternatively, more straight forward rearrangement can also be envisaged in that all PRBs having resulted in erroneous transmissions and sorted in increasing order of frequency are reallocated in the same order (cyclic permutation) to the user terminals with a predefined offset value. In this case for TTI 2, if the offset value is 3, terminal 12 would be allocated SC 11 and SC 13, terminal 13 would be allocated SC 14, SC 15 and SC7, and terminal 14 would be allocated SC 8 and SC 10.

In still another embodiment of the present invention a random new allocation may be envisaged for TTI 2 among all PRBs having resulted in erroneous transmissions in TTI 1.

The present example has been described for 2 consecutive TTIs. It will be understood by persons skilled in the art that the new allocation may only be applied for TTI 3 or following depending on the delay needed for determining that negative acknowledgements have to be sent.

It will be understood by the person skilled in the art that this invention may apply in the uplink as well as in the downlink of a radio communication network.

The most natural way to apply the invention is in the uplink. The scheduler is usually located in the base station. The information regarding the negative acknowledgements are as well available at the base station. Consequently, the method for allocating new resources to terminals having received NACK message can take place at the base station.

Nevertheless, the invention could also take place for resource allocation in the downlink under the condition that the NACK feedback messages generated at the terminals are made known at the scheduler. This requires additional signaling but is technically feasible.

Once the new resource allocation has been determined according to the present invention, the new allocation messages have to be conveyed to the users. Each and every method for transmitting such allocation messages can be used. The scope of the present invention is not restricted to a specific way of signaling the new allocations to the transmitters.

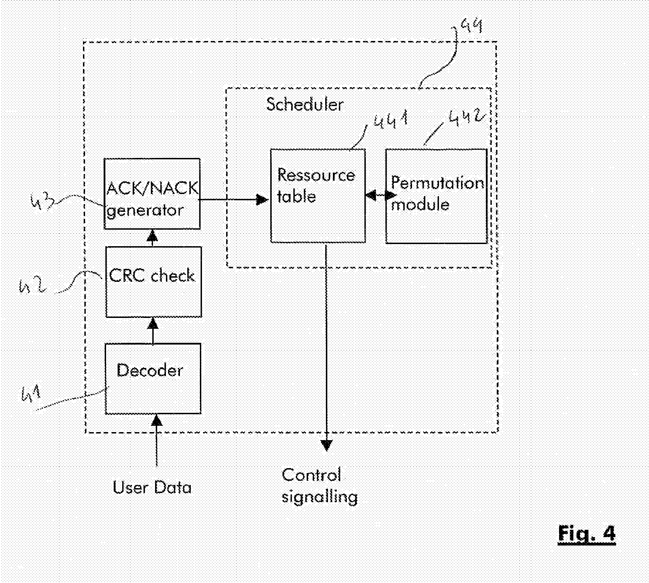

Figure 4 details a base station according to the present invention.

Base station 40 comprises a decoder 41, a CRC check 42, and ACK/NACK generator 43, a scheduler 44 comprising a resource table 441 and a rearrangement module 442.

Decoder 41 receives, decodes user data over the air interface and forwards them to the CRC check 42 in charge of detecting transmission errors. After this check, CRC checks 42 triggers ACK/NACK generator 43 implementing an HARQ/ARQ protocol and in charge of generating a positive or negative acknowledgement message which will be sent back to the terminal.

According to the present invention, ACK/NACK generator 43 is connected to scheduler 44. In case a NACK message has to be sent to a terminal, the identifier of this terminal is sent to scheduler 44 which set a flag in resource table containing a mapping of the terminal identifiers with their currently allocated RBP(s). When for one TTI all NACK messages have been signaled to scheduler 44, rearrangement module 442 is triggered in order to perform RPB rearrangement for terminals flagged in resource table 441.

When the rearrangement step is complete, the announcements of the new resources to the terminals are triggered by scheduler 44.

In this embodiment scheduler is located in base station 40. It will be understood by those skilled in the art that the scheduler may be part of other central network entity without departing from the scope of the present invention. In this case, an interface should exist between the ACK/NACK generator of the base station and the scheduler so that the information related to the identifier of the terminals having to be sent a NACK message can be forwarded to the scheduler.

The present invention is especially well suitable to be applied in resource allocation for OFDMA-based 3GPP LTE downlink but could be applied in a lot of other radio communication networks.

## Claims

1. Method for allocating radio resources for data transmission to/from users having experienced prior data transmissions over a radio link in a multi carrier radio communication network, an automatic repeat request or hybrid-automatic repeat request protocol being used for signaling erroneous data through a feedback message, said data transmission to/from users being assigned a set of sub carriers by a scheduling algorithm, said method being **characterized in that** the subcarriers assigned to at least two users having experienced a negative feedback message after an erroneous data transmission are rearranged among said at least two users for subsequent data transmission.

2. Method according to claim 1, wherein in case of prior successful transmission, new initial transmission are allocated to subcarriers already allocated to the user in the prior successful transmission attempt.

3. Method according to claim 1, wherein said rearrangement of retransmissions consists in assigning to a user a set of subcarriers offering a larger distance to the previously assigned set of subcarriers.

4. Method according to claim 1, wherein said rearrangement is a cyclic permutation having an offset equal to a predefined value.

5. Method according to claim 1, wherein said rearrangement is randomly performed.

6. Method according to claim 1, wherein the air interface is based on OFDMA technology, the transmitter of said data being a terminal and the receiver being a base station.

7. Method according to claim 1, wherein the air interface is based on OFDMA technology, the transmitter of said data being a base station and the receiver being a terminal.

8. Scheduler adapted to be used in a multi carrier radio communication network, said scheduler comprising means for assigning a set of sub carriers for data transmission to/from users, said system being **characterised in that** it further comprises:
- means for receiving an indication on identifiers of receivers having experienced erroneous data transmission;
- means for rearranging the set of allocated subcarriers to at least two users having experienced erroneous data transmission according to a predefined function;
- signalling said rearranged subcarrier allocation to said at least two users for further transmission.

9. Base station comprising a scheduler according to claim 8.
